# EUROPEAN PATENT APPLICATION

(11) **EP 3 343 482 A1**
(43) Date of publication of application: **04.07.2018**
(21) Application number: 16839545.7
(22) Date of filing: 22.08.2016
(51) Int. Cl.: G06Q 10/10, G06Q 10/06, G06Q 40/00, G06Q 40/02

(54) **BUSINESS MANAGEMENT SYSTEM AND METHOD THROUGH GENERATION OF ACCOUNTING AND FINANCIAL INFORMATION**

(30) Priority: 24.08.2015 KR 20150118954
(71) Applicant: Kim, Ju Ho, Yongin-si, Gyeonggi-do 17009 (KR)
(72) Inventor: Kim, Ju Ho, Yongin-si, Gyeonggi-do 17009 (KR)
(74) Representative: HGF Limited
(86) International application number: PCT/KR2016/009231
(87) International publication number: WO 2017/034256

(57) **Abstract**

The present invention relates to a business management system and method, A business management system according to one embodiment of the present invention comprises: a financial information collection part for collection financial information on a client online; a categorization part for classifying the collected financial information by category; and a financial information provision part for providing the categorized financial information to the client.

## Description

### TECHNICAL FIELD

The present disclosure relates to a business management system and method.

### BACKGROUND ART

Financial information, which represents the capital flow of a business, from large enterprises to small businesses, is very important for a series of management activities that manage and operate the corresponding business. From the financial information, the manager may understand how the financing and expenditure of the business are made and may use the fund as an indicator of how to operate the financing.

However, during the operation of the business, the flow of capital flowing into and out of the business is constantly continued, and the manager may need to confirm the financial status of the business at the time of decision related to the operation of the business.

### <Prior Art Literature>

(Patent Document 1) Korean Patent Laid-Open Publication No. 10-2015-0039523 (published on Apr. 20, 2015)

### DISCLOSURE OF THE INVENTION

### TECHNICAL PROBLEM

It is an object of an embodiment of the present invention to provide a business management system and method capable of aggregating and providing financial information of a client in real time so that the client may immediately check the financial status of the client when the client desires.

It is an object of an embodiment of the present invention to provide a business management system and method that may efficiently and reliably provide financial information to a client by accurately and promptly processing financial information collected about clients.

### TECHNICAL SOLUTION

Embodiments of the present invention provide a business management system including: a financial information collection unit configured to collect first financial information of a client via online; a category classification unit configured to classify the collected first financial information by category; and a financial information providing unit configured to provide the client with second financial information based on the first financial information classified by the category.

In an embodiment, the financial information collection unit may access a server of a financial institution with which the client trades and collect information on transaction details of the client with respect to the financial institution.

In an embodiment, the financial information collection unit may access at least one server of a bank and a credit card company with which the client trades and collect information on transaction details of the client with respect to at least one of the bank and the credit card company.

In an embodiment, the financial information collection unit may collect information on deposit and withdrawal details of an account of the client opened in the bank.

In an embodiment, the information on the deposit and withdrawal details may include: an amount deposited in or withdrawn from the account; and a customer who deposits the amount in the account or receives the amount withdrawn from the account.

In an embodiment, the financial information collection unit may collect information on usage details of a credit card issued by the credit card company to the client.

In an embodiment, the information on the usage details of the credit card may include: a settlement amount paid by the credit card; and a settlement place for paying the settlement amount with the credit card.

In an embodiment, the business management system may further include a storage unit for storing at least one of an ID, a password, and a certificate of the client required to access the server of the financial institution.

In an embodiment, the financial information collection unit may further collect an electronic tax invoice issued by the client or issued to the client.

In an embodiment, the financial information collection unit may further collect payroll details of the client.

In an embodiment, the category classification unit may classify the collected first financial information into categories for financial statements.

In an embodiment, the category classification unit may update a corresponding item by reflecting the collected first financial information to an item included in at least one of financial status tables and income statements previously determined for the client.

In an embodiment, when the information on the deposit and withdrawal details collected from the server of the bank is deposit details of depositing the amount in the account of the client, the category classification unit may classify the deposit details into debtors of financial statements, wherein when the customer included in the deposit details correspond to a predetermined customer of the client, the category classification unit may classify the deposit details into account receivable items included in at least one of financial status tables and income statements, wherein when the customer included in the deposit details is the bank, the category classification unit may classify the deposit details into borrowing items included in at least one of the financial status tables and the income statements and reflects the amounts included in the deposit details to the classified items, wherein when the information on the deposit and withdrawal details is the withdrawal details of withdrawing the amount from the account of the client, the category classification unit may classify the withdrawal details into creditors of the financial statements, wherein when the customer included in the withdrawal details corresponds to a predetermined buyer of the client, the category classification unit may classify the withdrawal details into accounts payable items included in at least one of the financial status tables and the income statements, wherein when the customer included in the withdrawal details is the bank, the category classification unit may classify the withdrawal details into deposit items included in at least one of the financial status tables and the income statements, and then reflect the amount included in the withdrawal details to the classified items.

In an embodiment, the category classification unit may classify information on usage details of the credit card collected from the server of the credit card company into debtors of financial statements, wherein the category classification unit may reflect an amount corresponding to a predetermined ratio of the settlement amount included in the usage details to an accrued expense item included in at least one of financial status tables and income statements, wherein the category classification unit may reflect the remaining amount of the settlement amount to a value added tax fee item included in at least one of the financial status tables and the income statements.

In an embodiment, the category classification unit may further determine an item corresponding to the usage details among items included in at least one of the financial status tables and the income statements according to the size of the settlement amount included in the usage details.

In an embodiment, when the settlement amount is less than or equal to a predetermined reference amount, the category classification unit may further determine the usage details into fringe benefit items included in at least one of the financial status tables and the income statements and reflect the settlement amount to the fringe benefit item, wherein if the settlement amount is greater than the reference amount, the category classification unit may further determine the usage details as an entertainment expenses item included in at least one of the financial status tables and the income statements and reflect the settlement amount to the entertainment expenses item.

In an embodiment, the financial information providing unit may provide at least one of the financial status tables and the income statements having the updated item to the client.

In an embodiment, the first financial information may include at least one of bankbook transaction details, credit card usage details, tax invoices, payroll details, production daily reports, purchase daily reports, and sales daily reports, and the second financial information may include at least one of financial status tables and income statements.

In other embodiments of the present invention, a business management method in which a business management system manages a business state of a client includes: collecting first financial information of the client on-line; classifying the collected first financial information by category; and providing second financial information to the client based on the first financial information classified by the category.

In still other embodiments of the present invention, provided is a computer-readable recording medium on which a program for executing the business management method is recorded.

### ADVANTAGEOUS EFFECTS

According to the embodiment of the present invention, the client may confirm the financial status of the client instantly at a desired time point, thereby helping the client's management activities.

According to the embodiment of the present invention, the financial information collected for the client may be processed accurately and promptly, so that the reliable financial information may be efficiently provided to the client.

### BRIEF DESCRIPTION OF THE DRAWINGS

FIG. 1 is a diagram illustrating a state in which a business management system according to an embodiment of the present invention is connected to other servers and terminals through a network.
FIG. 2 is an exemplary block diagram of a business management system according to an embodiment of the present invention.
FIG. 3 is an exemplary diagram illustrating information on deposit and withdrawal details of a client collected by a financial information collection unit from a bank server according to an embodiment of the present invention.
FIG. 4 is an exemplary diagram illustrating information on deposit and withdrawal details of a client collected by a financial information collection unit from a credit card company server according to an embodiment of the present invention.
FIG. 5 is a diagram illustrating an exemplary format of financial information provided to a client according to an embodiment of the present invention.
FIG. 6 is an exemplary flowchart illustrating a process in which a category classification unit classifies information on deposit and withdrawal details of a client by category according to an embodiment of the present invention.
FIG. 7 is an exemplary flowchart illustrating a process in which a category classification unit classifies information on credit card usage details of a client by category according to an embodiment of the present invention.
FIG. 8 is an exemplary flowchart of a business management method according to an embodiment of the present invention.

### MODE FOR CARRYING OUT THE INVENTION

Hereinafter, embodiments of the present invention will be described in detail with reference to the attached drawings.

The present invention relates to a business management system and method.

First, the background in which the present invention is derived will be described. In general, financial statements (e.g., financial status tables, income statements, etc.) are derived through settlement after a long period of time at the end of the business year (usually December 31 in Korea). That is, ordinary financial statements are derived based on business year (business management activity). Therefore, it is possible to check bad information on financial statements such as loss, excess debt ratio, and the like after the business year has passed, and accordingly, preventive measures may not be taken in advance regarding corporate management activities. As a result, for example, it causes loan refusal and interest rate rise in banking transactions.

Accordingly, the present invention provides financial statements that are indicators of management decision-making such as the operation of funds by creating and updating financial statements in real time so as to timely identify financial procurement and expenditure.

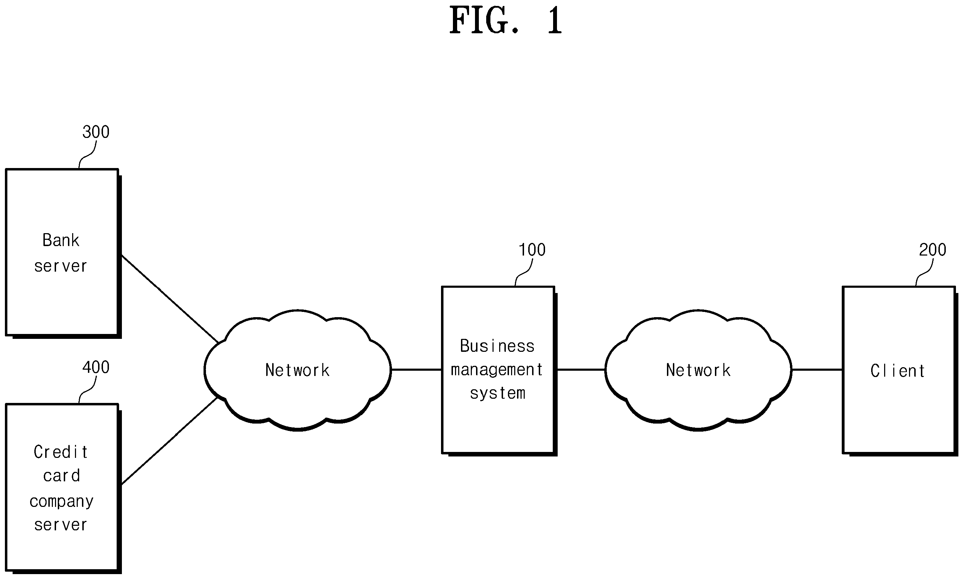

FIG. 1 is a diagram illustrating a state in which a business management system 100 according to an embodiment of the present invention is connected to other servers and terminals through a network.

The business management system 100 according to an embodiment of the present invention collects and processes financial information of a client on-line, and provides processed financial information, such as financial statements, income statements, etc., to the client. The client may immediately confirm the financial information provided by the business management system 100 at a desired time, and may execute management activities based on the financial information.

Also, the business management system 100 may collect and process financial information of the client at all times. As a result, the client receives the latest financial information reflecting the capital flow up to the time of confirming the financial information and uses it as basic data of management activities.

For this, referring to FIG. 1, the business management system 100 may be connected to various servers 300 and 400 through a network, and may also be connected to the client 200 through a network. The business management system 100 may access the servers 300 and 400 through a network to collect financial information of the client 200 and process the collected financial information to transmit the processed financial information to the cline 200 again through the network.

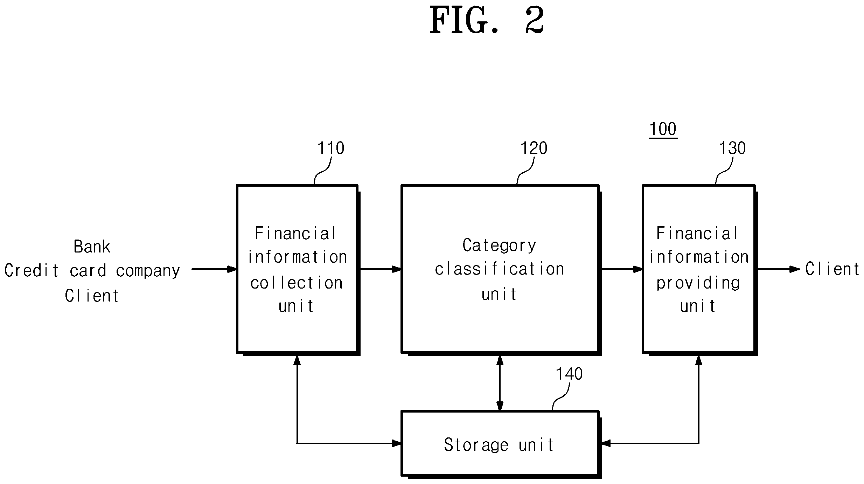

FIG. 2 is an exemplary block diagram of a business management system 100 according to an embodiment of the present invention.

As shown in FIG. 2, the business management system 100 includes a financial information collection unit 110, a category classification unit 120, and a financial information providing unit 130. The financial information collection unit 110 may collect financial information of the client 200 on-line. The category classification unit 120 may classify the collected financial information by category. The financial information providing unit 130 may provide the client 200 with financial information classified by category.

The financial information collection unit 110, as a device for collecting data by accessing various servers 300 and 400 through a network, may include a communication device for exchanging data by a predetermined communication method.

Further, according to an embodiment of the present invention, the financial information collection unit 110 collects financial information of the client 200 using a crawler that automatically collects desired information from various web sites over the Internet. The financial information collected by the financial information collection unit 110 may include, for example, deposit and withdrawal details, credit card usage details, tax invoice, payroll details, and production/purchase/sales daily report, as individual transaction details of the company concerned.

In this case, the financial information collection unit 110 includes a processor capable of executing the crawler, and accesses a predetermined web site (for example, a bank website, a credit card company website, etc.) at a predetermined time so that it is possible to inquire and collect financial information of the client 200.

In order for the financial information collection unit 110 to access the predetermined web site and collect the financial information of the client 200, the business management system 100 may further include a storage unit 140 for storing at least one information on the client 200 required for connection to the web site, such as an ID, a password, and a certificate and may retrieve and use it whenever necessary.

In particular, in order to access a web site of a financial institution, a certificate issued under the name of the client 200 is required. The business management system 100 may receives a certificate and various information required for web site connection from the client 200 and store it in the storage unit 140.

In addition, the financial information of the client 200 collected by executing the crawler may be stored in the storage unit 140 and may be read when the category classification unit 120 processes financial information.

According to an embodiment of the present invention, the financial information collection unit 110 accesses a server of a financial institution with which the client 200 trades, and collects information on transaction details of the client 200 with respect to the financial institution. That is, the financial information of the client 200 collected by the business management system 100 according to the embodiment of the present invention includes the distance details of the client 200 to the financial institution.

Specifically, the financial information collection unit 110 accesses at least one server 300 or 400 of a bank and a credit card company with which the client 200 trades, and collects information on the client's transaction details with respect to at least one of the bank and the credit card company.

In other words, the financial institution in which transaction details of the client 200 are collected includes at least one of a bank and a credit card company.

According to an embodiment, the financial information collection unit 110 may collect information on deposit and withdrawal details of an account of the client 200 opened in a bank.

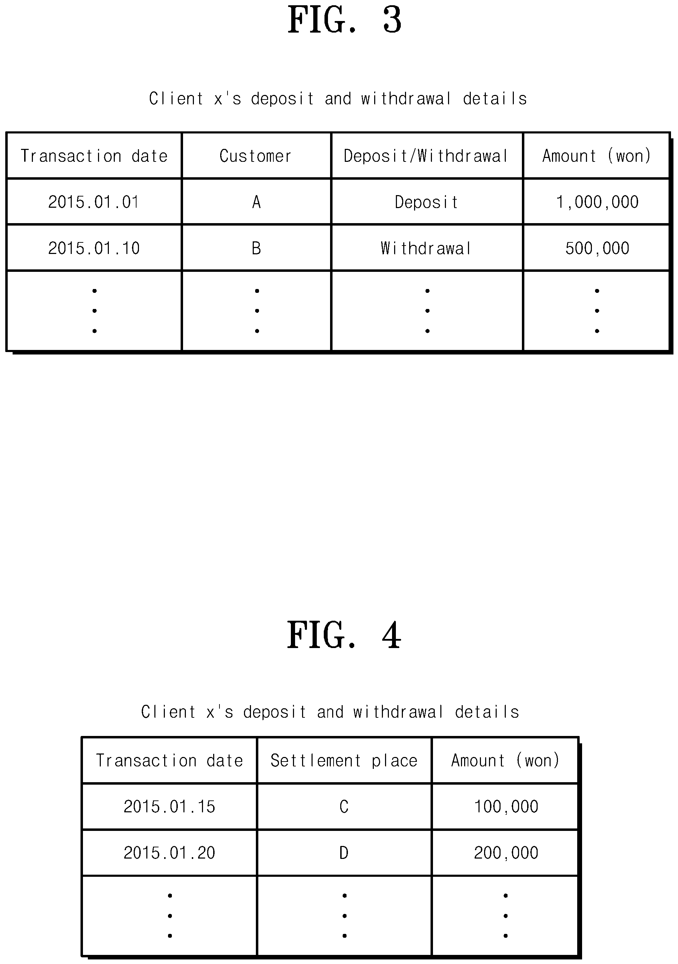

FIG. 3 is an exemplary diagram illustrating information on deposit and withdrawal details of a client 200 collected by the financial information collection unit 110 from a bank server 300 according to an embodiment of the present invention.

Referring to FIG. 3, the information on deposit and withdrawal details of the client 200 includes an amount of money deposited in or withdrawn from the account of the client 200, and a customer who deposits the amount into the account or receives the withdrawn amount from the account.

Further, the information on the deposit/withdrawal details may further include a transaction date (i.e., deposit/withdrawal date) in which the money is deposited in or withdrawn from the account.

According to another embodiment, the financial information collection unit 110 may collect information on credit card usage details issued by the credit card company to the client 200.

FIG. 4 is an exemplary diagram illustrating information on a credit card usage details of a client 200 collected from a credit card company server 400 by a financial information collection unit 110 according to an embodiment of the present invention.

Referring to FIG. 4, the information on credit card usage details of the client 200 may include a settlement amount paid with the credit card of the client 200 and a settlement place for paying the settlement amount with the credit card. Further, the information on the credit card usage details may further include a settlement date for paying for the settlement amount with a credit card.

As described above, the financial information collection unit 110 may retrieve information including at least one of various information such as IDs, passwords, and certificates of the client 200 required to access the server 300 or 400 of a financial institution such as a bank or a credit card company, from the storage unit 140, and may access at least one of the server 300 of the bank and the server 400 of the credit card company.

According to an embodiment of the present invention, the financial information collection unit 110 may periodically or non-periodically collect information on transaction details of the client 200 at a predetermined time.

For example, the financial information collection unit 110 accesses a web site of a bank and a credit card company with which the client 200 trades at a predetermined time or a fixed time of a business day to collect the withdrawal details and credit card usage details of the client 200 and stores them in the storage unit 140.

When the financial information collection unit 110 collects transaction details of the client 200 repeatedly, the financial information collection unit 110 may collect only transaction details from the previous transaction details collection time to the current transaction details collection time, and may update the transaction details information of the client 200 continuously through a method of adding the transaction details information collected on this transaction to the existing transaction details information that has been collected and stored in the storage unit 140.

According to another embodiment of the present invention, the financial information collection unit 110 may collect information on transaction details of the client 200 from a financial institution such as a bank or a credit card company, and also may collect the tax calculation details of the client 200.

According to this embodiment, the financial information collection unit 110 may further collect the electronic tax invoice issued by the client 200 or issued to the client 200.

When supplying goods or services, the client 200 issues a tax invoice to certify the transaction fact that the trade is made with the person who received the goods or services, including the value added tax, and when electronic tax invoices are issued, they are exchanged online via the Internet, for example, by e-mail.

On the other hand, when receiving goods or services, the client 200 receives an issued tax invoice to certify the transaction fact that the trade is made with the person who supplies the goods or services, including the value added tax, and when electronic tax invoices are issued also, they are exchanged online via the Internet, for example, by e-mail.

According to this embodiment, the financial information collection unit 110 accesses a server that stores and manages electronic tax invoices issued by the client 200 or issued to the client 200, thereby collecting the electronic tax invoices of the client 200 online.

Also, the financial information collection unit 110 may periodically or non-periodically collect electronic tax invoices of the client 200 to continuously update the tax calculation details of the client 200.

Further, according to another embodiment of the present invention, the financial information collection unit 110 may further collect the payroll details of the client 200.

The client 200 is to pay the employee who is employed as a user in the labor contract, and according to this embodiment, the financial information collection unit 110 may collect the payroll file in which the payout paid to the employee by the client 200 is recorded, and collect the payroll details of the client 200.

In this case, the financial information collection unit 110 may collect payroll details of the client 200 by accessing a server that stores and manages the payroll file of the client 200.

Also, as in the collection of the above electronic tax invoices, the collection of the payroll details of the client 200 by the financial information collection unit 110 is repeated periodically or non-periodically so that the payroll details of the client 200 are continuously may be updated.

Referring to FIG. 2 again, the category classification unit 120 includes a processor for processing data, and may classify financial information of the client 200 collected by the financial information collection unit 110 according to categories.

According to the embodiment of the present invention, the category classification unit 120 may classify the collected financial information (e.g., deposit and withdrawal details, credit card usage, tax invoices, payroll, production/purchase/sales daily reports, etc.) according to categories related to financial statements.

The financial statement is a document in which one or more items are displayed according to an accounting principle in order to indicate the financial status of the business. The category classification unit 120 classifies items used in the financial statements into categories to classify the financial information collected by the financial information collection unit 110 by category.

The financial statements include financial status tables, income statements, capital change tables, and cash flow statements. According to one embodiment of the present invention, the category classification unit 120 may reflect the collected financial information to an item included in at least one of financial status tables and income statements previously determined for the client 200 and update the corresponding item. At least one of the financial status tables and income statements having an item updated in such a way may be provided to the client 200 through the financial information providing unit 130.

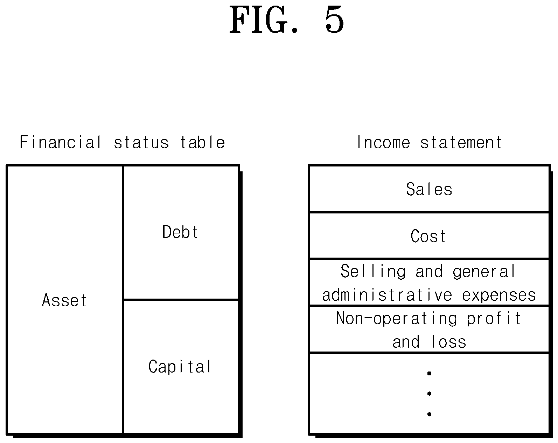

FIG. 5 is a diagram illustrating an exemplary format of financial information provided to a client 200 according to an embodiment of the present invention.

As described above, the business management system 100 processes financial information by collecting financial information of the client 200 and classifies the financial information by category, and transmits the processed financial information to the client 200 in at least one format of financial statements such as financial status tables and income statements.

Referring to FIG. 5, the financial status tables provided to the client 200 are documents indicating the financial status according to the assets, capital, and liabilities of the client 200 from a certain point in time, and may be largely divided into debtors and creditors. In the financial status tables, the item corresponding to the debtor is the asset, and the items corresponding to the creditor are the debt and the capital.

Also, the income statements provided to the client 200 are documents for comparing the profit and cost of the client 200 generated during a certain period of time, and as shown in FIG. 5, may include items such as sales, cost, selling and general administrative expenses, and non-operating profit and loss.

Each item may correspond to either a debtor or a creditor.

According to an embodiment of the present invention, in relation to the financial status tables and income statements provided to the client 200, the items included therein are determined appropriate for the client 200 according to various conditions such as the business category in which the client 200 operates, so that financial status tables and income statements may be formatted.

In this way, financial status tables and income statements that include predetermined items for the client 200 may be stored in the storage unit 140, and each item of the financial status tables and the income statements may be reflected to the corresponding items as the financial information of the client 200 collected by the financial information collection unit 110 is classified into categories by the category classification unit 120.

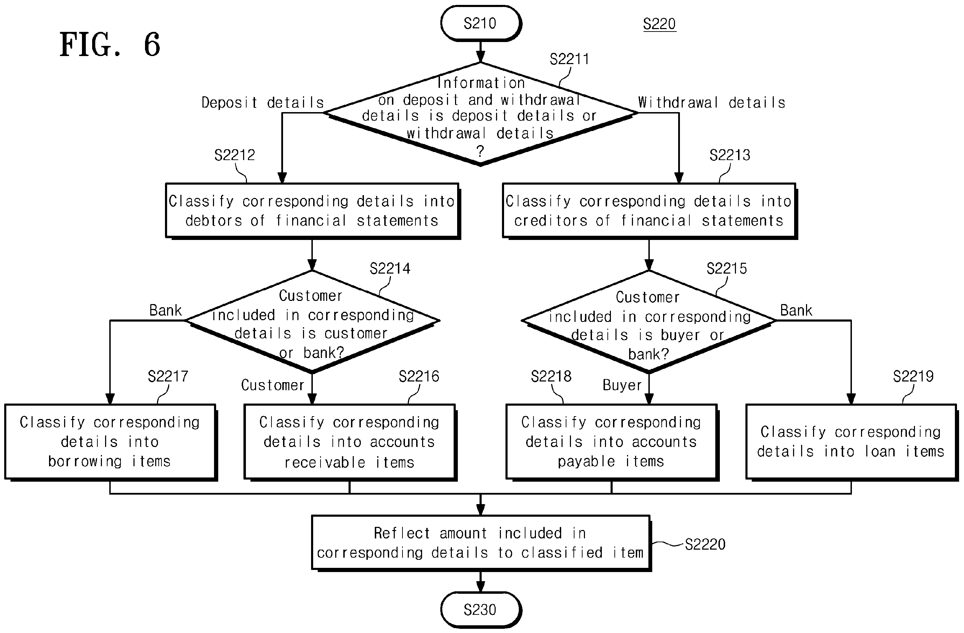

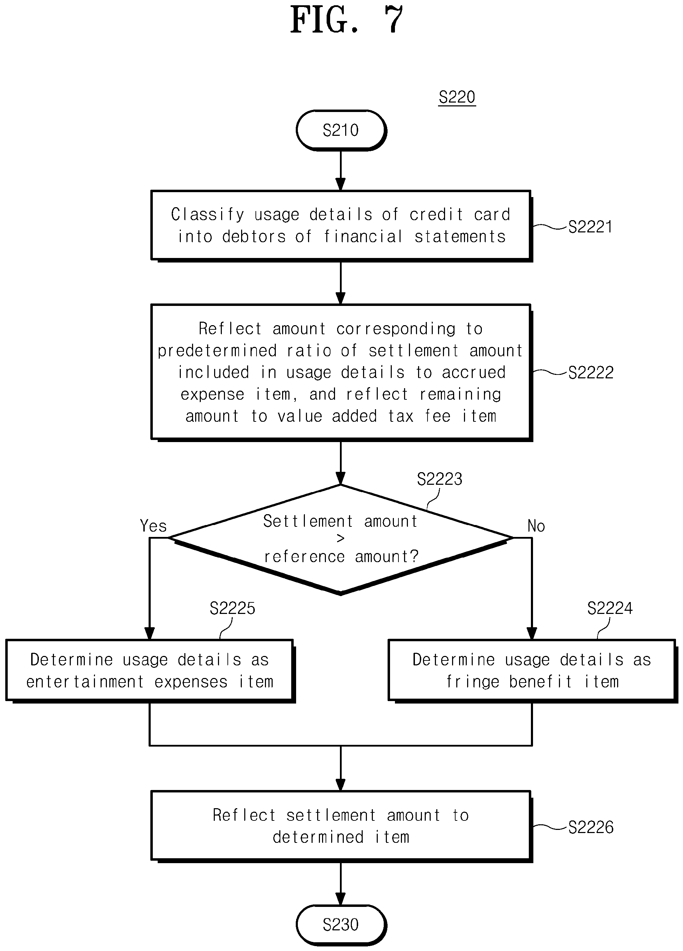

Hereinafter, the processes that the category classification unit 120 classifies the collected financial information of the client 200 by category, and reflects them to the items included in the financial status tables and the income of the client 200 to create the financial status tables and the income statements will be described with reference to FIGS. 6 and 7 according to an embodiment of the present invention.

FIG. 6 is an exemplary flowchart illustrating a process in which the category classification unit 120 classifies information on deposit and withdrawal details of the client 200 by category according to an embodiment of the present invention.

Referring to FIG. 6, when the information on deposit and withdrawal details of the client 200 collected from the server 300 of the bank is the deposit details in which the money is deposited in the account of the client 200 (deposit details in S2211), the category classification unit 120 classifies the deposit details into debtors of financial statements (S2212), and when the customer included in the deposit details corresponds to a predetermined customer of the client 200 (customer in S2214), classifies the deposit details into accounts receivable items included in at least one of the financial status tables and the income statements (S2216), and when the customer included in the deposit details is a bank (bank in S2214), classifies the deposit details into borrowing items included in at least one of financial status tables and income statements (S2217), and then reflects the amount included in the deposit details to the classified items (i.e., accounts receivable item or borrowing item) (S2220).

Also, when the information on the withdrawal details of the client 200 collected from the server 300 of the bank is the withdrawal details of withdrawing the amount from the account of the client 200 (withdrawal details in S2211), the category classification unit 120 classifies the withdrawal details into creditors of financial statements (S2213), and when the customer included in the withdrawal details corresponds to the predetermined buyer of the client 200 (the buyer in S2215), classifies the withdrawal details as an account receivable item included in at least one of financial status tables and income statements (S2218), and when the account included in the withdrawal details is a bank (bank in S2215), classifies the withdrawal details into deposit items included in at least one of financial status tables and income statements (S2219), and then reflects the amount included in the withdrawal details to the classified items (i.e., accounts payable item or deposit item) (S2220).

In such a way, the category classification unit 120 may determine an item corresponding to the transaction details information based on the nature of the transaction (i.e., whether it is a deposit or withdrawal details) and the type of customer (i.e., whether it is a customer, a buyer, or a bank) from the transaction details information of the client 200 obtained from the bank and may update the corresponding item by reflecting the amount included in the transaction details information (e.g., adding the corresponding amount to the existing amount listed in the item).

Information on the customer and the buyer of the client 200 used for determining the items of the deposit and withdrawal details may be received from the client 200 in advance and stored in the storage unit 140, and the category classification unit 120 may retrieve information on a customer or a buyer from the storage unit 140 and use it to classify items in the deposit and withdrawal details.

FIG. 7 is an exemplary flowchart illustrating a process in which the category classification unit 120 classifies information on credit card usage details of the client 200 by category according to an embodiment of the present invention.

Referring to FIG. 7, the category classification unit 120 may classify the information on the usage details of the credit card collected from the credit card company's server 400 into debtors of financial statements (S2221), reflect the amount corresponding to the predetermined ratio of the settlement amount included in the usage details to the accrued expense item included in at least one of the financial status tables and the income statements, and reflect the remaining amount of the settlement amount to the value added tax fee item included in at least one of the financial status tables and the income statements (S2222).

That is, according to this embodiment, the category classification unit 120 may classify credit card usage details information obtained from a credit card company into debtors of financial statements and debtors of creditors, divide the settlement amount included in the usage details by a predetermined ratio and reflect a part thereof to the first item, and update the first and second items by reflecting the remainder to the second item.

Here, the category classification unit 120 may reflect the amount corresponding to 10/11 of the settlement amount included in the usage details to the accrued expense item and may reflect the amount corresponding to 1/11 of the settlement amount to the value added tax fee item.

Further, the category classification unit 120 may further determine an item corresponding to the usage details among items included in at least one of the financial status tables and the income statements according to the size of the settlement amount included in the usage details.

For example, referring to FIG. 7, when the settlement amount is less than or equal to the predetermined reference amount (NO in S2223), the category classification unit 120 may further determine the usage details. as the fringe benefit item included in at least one of the financial status tables and the income statements (S2224), and transmit the settlement amount to the determined item (i.e., the fringe benefit) (S2226).

On the other hand, when the settlement amount is larger than the reference amount (YES in S2223), the category classification unit 120 may further determine the usage details. as an entertainment expenses item included in at least one of the financial status tables and the income statements (S2225), and reflect the settlement amount to the determined item (i.e., the entertainment expenses item) (S2226).

As described above, according to an embodiment of the present invention, the category classification unit 120 may classify items corresponding to the usage details according to the size of the settlement amount using the credit card.

Furthermore, the category classification unit 120 may add one or both of the tax calculation details and the payroll details of the client 200 collected in the above to the item included in the financial statements (e.g., financial status tables and income statements) of the client 200, and may further include financial information other than bank transaction details and credit card usage details in the financial statements.

Referring again to FIG. 2, the financial information providing unit 130 is an interface for exchanging data with the client 200, and as shown in FIG. 1, when the business management system 100 and the client 200 are connected through a network, the financial information providing unit 130 may include a communication device for transmitting and receiving data by a predetermined communication method.

According to the embodiment of the present invention, the financial information providing unit 130 may provide the client 200 with at least one of financial statements (e.g., financial status tables and income statements) whose items are updated through the above process.

According to an embodiment, the financial information providing unit 130 may periodically transmit the financial statements to the client 200 at predetermined intervals, thereby providing the client 200 with financial information.

According to another embodiment, when receiving the financial information provision request from the client 200, the financial information providing unit 130 may transmits the financial statements to the client 200 to respond to the request of the client 200, thereby providing financial information.

As described above, the business management system 100 enables the client 200 to immediately check the latest financial information reflecting the client financial status when the client 200 desires, thereby helping the client 200 in the management activities.

In addition, the business management system 100 may accurately and quickly process the collected financial information on the client 200 through the category classification process, thereby providing the client 200 with reliable financial information more efficiently.

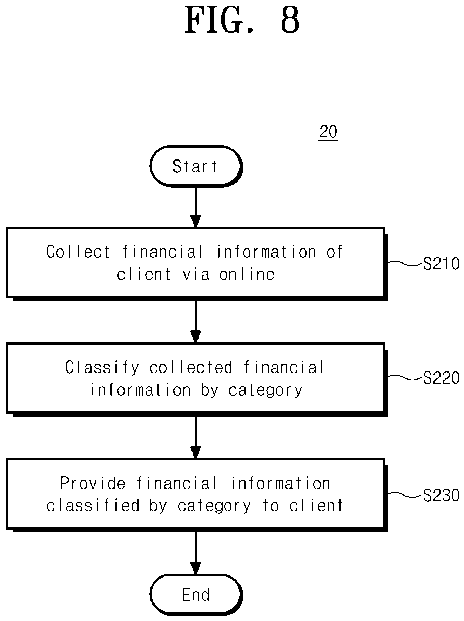

FIG. 8 is an exemplary flowchart of a business management method 20 according to an embodiment of the present invention.

The business management method 20 may be performed by the business management system 100 according to the embodiment of the present invention and may provide the financial information to the client 200 to manage the business state of the client 200.

Referring to FIG. 8, the business management method 20 may include collecting financial information of the client 200 online (S210), classifying the collected financial information according to categories (S220), and providing financial information to the client 200 (S230).

According to the embodiment of the present invention, collecting the financial information (S210) includes accessing a server of a financial institution with which the client 200 trades and collecting information on transaction details of the client 200 with respect to the financial institution.

More specifically, the accessing of the server of the financial institution and the collecting of the information on the transaction details of the client 200 may include accessing at least one server 300 or 400 of a bank and a credit card company with which the client 200 trades and collecting information on a transaction details of the client with respect to at least one of the bank and the credit card company.

According to an embodiment, the collecting of the financial information (S210) may include collecting information on deposit and withdrawal details of the client 200 opened in the bank.

Referring to FIG. 3, the information on deposit and withdrawal details of the client 200 includes an amount of money deposited in or withdrawn from the account of the client 200, and a customer who deposits the amount into the account or receives the withdrawn amount from the account.

According to another embodiment, the collecting of the financial information (S210) may include collecting information on the usage details of the credit card issued by the credit card company to the client 200.

The information on the usage details. of the credit card may include a settlement amount settled by the credit card, and a settlement place for settling the settlement amount by the credit card.

According to an embodiment of the present invention, the collecting of the financial information (S210) may include receiving at least one of the ID, password, and certificate of the client 200 from the storage unit 140 and based on this, accessing the servers 300 and 400 of the financial institution.

According to another embodiment, the collecting of the financial information (S210) may further include collecting electronic tax invoices issued by the client 200 or issued to the client 200 from the client.

According to another embodiment, the collecting of the financial information (S210) may further include collecting payroll details of the client 200 from the client 200.

According to an embodiment of the present invention, the classifying of the collected financial information by category (S220) may include classifying the collected financial information by categories related to financial statements.

According to an embodiment, the classifying of the collected financial information by categories related to financial statements may include reflecting the collected financial information to an item included in at least one of financial status tables and income statements having a predetermined format for the client 200 to update the corresponding item.

According to an embodiment of the present invention, the providing of the financial information classified by the category to the client 200 (S230) may include providing at least one of the financial status tables and the income statements having the updated item to the client 200.

The business management method 20 may be stored on a computer-readable recording medium that is manufactured as a program for execution on a computer. The computer-readable recording medium includes all kinds of storage devices in which data readable by a computer system is stored. Examples of the computer-readable recording medium include ROM, RAM, CD-ROM, magnetic tape, floppy disk, optical data storage, and the like.

In addition, the business management method 20 may be implemented as a computer program stored on a medium for execution in association with the computer.

While the present invention is particularly shown and described with reference to exemplary embodiments thereof, the above embodiments are merely illustrative of the spirit of the present invention and are not limited thereto. Those skilled in the art will understand that various modifications may be made to the embodiments described above. The scope of the present invention is defined only by the interpretation of the appended claims.

## Claims

1. A business management system comprising:
a financial information collection unit configured to collect first financial information of a client via online;
a category classification unit configured to classify the collected first financial information by category; and
a financial information providing unit configured to provide the client with second financial information based on the first financial information classified by the category.

2. The business management system of claim 1, wherein the financial information collection unit accesses a server of a financial institution with which the client trades and collects information on transaction details of the client with respect to the financial institution.

3. The business management system of claim 2, wherein the financial information collection unit accesses at least one server of a bank and a credit card company with which the client trades and collects information on transaction details of the client with respect to at least one of the bank and the credit card company.

4. The business management system of claim 3, wherein the financial information collection unit collects information on deposit and withdrawal details of an account of the client opened in the bank.

5. The business management system of claim 4, wherein the information on the deposit and withdrawal details comprises:
an amount deposited in or withdrawn from the account; and
a customer who deposits the amount in the account or receives the amount withdrawn from the account.

6. The business management system of claim 3, wherein the financial information collection unit collects information on usage details of a credit card issued by the credit card company to the client.

7. The business management system of claim 6, wherein the information on the usage details of the credit card comprises:
a settlement amount paid by the credit card; and
a settlement place for paying the settlement amount with the credit card.

8. The business management system of claim 2, further comprising a storage unit for storing at least one of an ID, a password, and a certificate of the client required to access the server of the financial institution.

9. The business management system of claim 1, wherein the financial information collection unit further collects an electronic tax invoice issued by the client or issued to the client.

10. The business management system of claim 1, wherein the financial information collection unit further collects payroll details of the client.

11. The business management system of claim 1, wherein the category classification unit classifies the collected first financial information into categories for financial statements.

12. The business management system of claim 11, wherein the category classification unit updates a corresponding item by reflecting the collected first financial information to an item included in at least one of financial status tables and income statements previously determined for the client.

13. The business management system of claim 5, wherein when the information on the deposit and withdrawal details collected from the server of the bank is deposit details of depositing the amount in the account of the client, the category classification unit classifies the deposit details into debtors of financial statements,
wherein when the customer included in the deposit details correspond to a predetermined customer of the client, the category classification unit classifies the deposit details into account receivable items included in at least one of financial status tables and income statements,
wherein when the customer included in the deposit details is the bank, the category classification unit classifies the deposit details into borrowing items included in at least one of the financial status tables and the income statements and reflects the amounts included in the deposit details to the classified items,
wherein when the information on the deposit and withdrawal details is the withdrawal details of withdrawing the amount from the account of the client, the category classification unit classifies the withdrawal details into creditors of the financial statements,
wherein when the customer included in the withdrawal details corresponds to a predetermined buyer of the client, the category classification unit classifies the withdrawal details into accounts payable items included in at least one of the financial status tables and the income statements,
wherein when the customer included in the withdrawal details is the bank, the category classification unit classifies the withdrawal details into deposit items included in at least one of the financial status tables and the income statements, and then reflects the amount included in the withdrawal details to the classified items.

14. The business management system of claim 7, wherein the category classification unit classifies information on usage details of the credit card collected from the server of the credit card company into debtors of financial statements,
wherein the category classification unit reflects an amount corresponding to a predetermined ratio of the settlement amount included in the usage details to an accrued expense item included in at least one of financial status tables and income statements,
wherein the category classification unit reflects the remaining amount of the settlement amount to a value added tax fee item included in at least one of the financial status tables and the income statements.

15. The business management system of claim 14, wherein the category classification unit further determines an item corresponding to the usage details among items included in at least one of the financial status tables and the income statements according to the size of the settlement amount included in the usage details.

16. The business management system of claim 15, wherein when the settlement amount is less than or equal to a predetermined reference amount, the category classification unit further determines the usage details. as a fringe benefit item included in at least one of the financial status tables and the income statements and reflects the settlement amount to the fringe benefit item,
wherein if the settlement amount is greater than the reference amount, the category classification unit further determines the usage details as an entertainment expenses item included in at least one of the financial status tables and the income statements and reflects the settlement amount to the entertainment expenses item.

17. The business management system of claim 12, wherein the financial information providing unit provides at least one of the financial status tables and the income statements having the updated item to the client.

18. The business management system of claim 1, wherein the first financial information comprises at least one of bankbook transaction details, credit card usage details, tax invoices, payroll details, production daily reports, purchase daily reports, and sales daily reports, and the second financial information comprises at least one of financial status tables and income statements.

19. A business management method in which a business management system manages a business state of a client, the method comprising:
collecting first financial information of the client on-line;
classifying the collected first financial information by category; and
providing second financial information to the client based on the first financial information classified by the category.

20. A computer-readable recording medium on which a program for executing a business management method according to claim 19 is recorded.
